# EUROPEAN PATENT APPLICATION

(11) **EP 2 728 890 A2**
(43) Date of publication of application: **07.05.2014**
(21) Application number: 13189835.5
(22) Date of filing: 23.10.2013
(51) Int. Cl.: H04N 21/2343, H04N 21/422, H04N 21/482, H04N 21/658, G06F 3/16

(54) **Broadcast receiving apparatus, server and control methods thereof**

(30) Priority: 31.10.2012 KR 20120122500
(71) Applicant: Samsung Electronics Co., Ltd, Gyeonggi-do 443-742 (KR)
(72) Inventor: Nam, Dae-hyun, Gyeonggi-do (KR); Choi, Young-ho, Gyeonggi-do (KR)
(74) Representative: Walaski, Jan Filip

(57) **Abstract**

A broadcasting receiving apparatus is provided. The broadcasting receiving apparatus includes a storage unit which is configured to store information in which broadcasting channel information and user uttered channel names are mapped, a voice receiver which is configured to receive a user uttered voice, including a channel name, a first communicator configured to transmit the received user uttered voice to a first server, and a controller which is configured to search the user uttered channel name corresponding to text information from the storage unit when the text information corresponding to the user uttered voice is received from the first server, and control channel switching to a channel corresponding to the broadcasting channel information mapped with the searched user uttered channel name.

## Description

The present invention relates to a broadcast receiving apparatus, a server, and control methods thereof. More particularly, the present invention relates to a broadcast receiving apparatus controlled according to a user voice, a server, and control methods thereof.

Various kinds of display apparatuses have been developed, and have included various functions for user services. In particular, in recent years, televisions (TVs) have been connected to the Internet, and support Internet service. Further, the user can watch a large number of digital broadcasting channels through the TVs.

In recent years, voice recognition techniques have been developed to intuitively control display apparatuses. In particular, the TVs can recognize a user voice and perform a function corresponding to the user voice, such as volume adjustment or volume change.

However, the display apparatuses of the related art, which recognize the user voice, are inconvenient to the user. In particular, since channel information transmitted as a broadcasting signal is different from a general-purpose channel name generally recognized by the user, there are many problems in terms of voice recognition-based channel switching function.

One or more exemplary embodiments may provide a broadcasting receiving apparatus which performs channel switching, using channel information previously mapped with user uttered channel names, a server, and control methods thereof.

According to an aspect of an exemplary embodiment, there is provided a broadcasting receiving apparatus. The broadcasting receiving apparatus may include a storage unit which is configured to store information in which broadcasting channel information and user uttered channel names are mapped, a voice receiver which is configured to receive a user uttered voice, including a channel name, a first communicator which is configured to transmit the received user uttered voice to a first server, and a controller which is configured to search a user uttered channel name corresponding to text information from the storage unit when the text information corresponding to the user uttered voice is received from the first server, and control channel switching to a channel corresponding to the broadcasting channel information mapped with the searched user uttered channel name.

The broadcasting receiving apparatus may further include a second communicator which is configured to perform communication with a second server configured to store the information in which the broadcasting channel information and the user uttered channel names are mapped. The controller may transmit the text information to the second server when the user uttered channel name corresponding to the text information is not searched from the storage unit, and receive a control signal for the channel switching to the channel corresponding to the text information from the second server.

The controller may determine a user utterance intention through sentence pattern analysis for the text information, and control the channel switching to the channel corresponding to the broadcasting channel information mapped with the searched user uttered channel name when it is determined that the user utterance intention is the channel switching.

The controller may transmit the text information to a second server when the user utterance intention is not determined through sentence pattern analysis for the text information, and receive a control signal for the channel switching to the channel corresponding to the text information from the second server when it is determined in the second server that the user utterance intention is the channel switching.

The controller may update the stored broadcasting channel information with changed broadcasting channel information when the broadcasting channel information is changed based on broadcasting channel information received from outside according to a preset event.

The user uttered channel names may include candidate channel names which are generally uttered by the user as a channel name corresponding to the broadcasting channel information. The broadcasting channel information may include at least one of a broadcasting channel name and a broadcasting channel number.

According to another aspect of an exemplary embodiment, there is provided a server which performs communication with a broadcasting receiving apparatus. The server may include a communicator which is configured to perform the communication with the broadcasting receiving apparatus, a storage unit which is configured to store information in which broadcasting channel information and user uttered channel names are mapped, and a controller which is configured to search a user uttered channel name corresponding to text information from the storage unit when the text information corresponding to the user uttered voice including a channel name is received from the broadcasting receiving apparatus, and control transmission of a control signal for channel switching to a channel corresponding to the broadcasting channel information mapped with the searched user uttered channel name to the broadcasting receiving apparatus.

The controller may determine a user utterance intention through sentence pattern analysis for the text information and control the transmission of the control signal for the channel switching to the channel corresponding to the text information to the broadcasting apparatus when it is determined that the user utterance intention is the channel switching.

The controller may update the stored information with changed broadcasting channel information when the broadcasting channel information is changed based on broadcasting channel information received from outside according to a preset event.

The user uttered channel names include candidate channel names, which are uttered by the user as a channel name corresponding to the broadcasting channel information. The broadcasting channel information may include at least one of a broadcasting channel name and a broadcasting channel number.

According to another aspect of an exemplary embodiment, there is provided a control method of a broadcasting receiving apparatus. The control method may include receiving a user uttered voice, including a channel name, transmitting the received user uttered voice to a first server, determining a user uttered channel name corresponding to text information based on pre-stored information in which broadcasting channel information and user uttered channel names are mapped, when the text information corresponding to the user uttered voice is received from the first server; and performing channel switching to a channel corresponding to the broadcasting channel information mapped with the determined user uttered channel name.

The control method may further include transmitting the text information to a second server which is configured to store the information in which the broadcasting channel information and the user uttered channel names are mapped, when the user uttered channel name corresponding to the text information is not determined based on the stored information, and receiving a control signal for the channel switching to the channel corresponding to the text information from the second server.

The control method may further include determining a user utterance intention through sentence pattern analysis for the text information. The performing channel switching may include performing the channel switching to the channel corresponding to the broadcasting channel information mapped with the determined user uttered channel name when it is determined that the user utterance intention is the channel switching.

The control method may further include transmitting the text information to a second server when the user utterance intention is not determined through sentence pattern analysis for the text information, and receiving a control signal for the channel switching to the channel corresponding to the text information from the second server when it is determined that the user utterance intention is the channel switching.

The control method may further include updating the stored broadcasting channel information with changed broadcasting channel information when the broadcasting channel information is changed based on broadcasting channel information received from the outside according to a preset event.

The user uttered channel names may include candidate channel names which are uttered by the user as a channel name corresponding to the broadcasting channel information. The broadcasting channel information may include at least one of a broadcasting channel name and a broadcasting channel number.

According to another aspect of an exemplary embodiment, there is provided a control method of a server which performs communication with a broadcasting receiving apparatus. The control method may include receiving text information corresponding to a user uttered voice, including a channel name, from the broadcasting receiving apparatus, determining a user uttered channel name corresponding to the text information based on pre-stored information in which broadcasting channel information and user uttered channel names are mapped, and transmitting a control signal, for channel switching to a channel corresponding to the broadcasting channel information mapped with the determined user uttered channel name, to the broadcasting receiving apparatus.

The control method may further include determining user utterance intention through sentence pattern analysis for the text information. The transmitting may include transmitting the control signal for the channel switching to the channel corresponding to the broadcasting channel information mapped with the determined user uttered channel name when it is determined that the user utterance intention is the channel switching.

The method may further include updating the stored information with changed broadcasting channel information when the broadcasting channel information is changed based on broadcasting channel information received from outside according to a preset event.

The user uttered channel names may include candidate channel names which are uttered by the user as a channel name corresponding to the broadcasting channel information. The broadcasting channel information may include at least one of a broadcasting channel name and a broadcasting channel number.

According to another aspect of an exemplary embodiment, there is provided a control method of an interactive system. The control method may include receiving a user voice, including a broadcasting channel name, transmitting the received user voice to an automatic speech recognition (ASR) server, transmitting text information corresponding to the received user voice to an interactive television, transmitting the received text information to an interactive server, determining a user intention corresponding to the received text information, and searching a content server based on the determined user intention.

According to the exemplary embodiments, an accurate channel switching function may be to improve the convenience of a user.

Additional aspects and advantages of the exemplary embodiments will be set forth in the detailed description, will be obvious from the detailed description, or may be learned by practicing the exemplary embodiments.

The above and/or other aspects will be more apparent by describing in detail exemplary embodiments, with reference to the accompanying drawings, in which:
FIG. 1 is a block diagram illustrating an interactive system according to an exemplary embodiment;
FIG. 2 is a sequence diagram explaining a general operation of the interactive system illustrated in FIG. 1;
FIG. 3 is a block diagram illustrating a configuration of a broadcasting receiving apparatus illustrated in FIG. 1;
FIG. 4 is a view illustrating a detailed configuration of a broadcasting receiving apparatus according to an exemplary embodiment;
FIG. 5 is a block diagram illustrating configurations of a first server and a second server illustrated in FIG. 1;
FIG. 6 is a view illustrating a channel mapping table according to an exemplary embodiment;
FIG. 7 is a view illustrating an algorithm type for channel switching according to voice recognition according to an exemplary embodiment;
FIG. 8 is a view explaining an operation of an interactive system according to an exemplary embodiment;
FIG. 9 is a flowchart illustrating a control method of a broadcasting receiving apparatus according to an exemplary embodiment; and
FIG. 10 is a flowchart illustrating a control method of a server according to an exemplary embodiment.

Hereinafter, exemplary embodiments will be described in more detail with reference to the accompanying drawings.

In the following description, same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail.

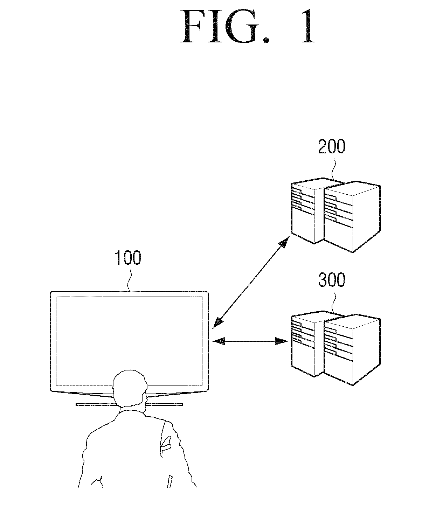

FIG. 1 is a view illustrating an interactive system according to an exemplary embodiment. Referring to FIG. 1, an interactive system includes a broadcasting receiving apparatus 100, a first server 200, and a second server 300. The broadcasting receiving apparatus 100 may be an apparatus, such as a smart TV, but it is not limited. The broadcasting receiving apparatus may be implemented with an apparatus, such as a monitor or a set top box.

When a user voice is input, the broadcasting receiving apparatus 100 converts the inputted user voice into a digital signal, and transmits the digital signal to the first server 200. When the digital signal is received from the broadcasting receiving apparatus 100, the first server converts the digital signal, corresponding to the received user voice into text information using a language model, an acoustic model, and a pronunciation dictionary, and transmits the text information to the broadcasting receiving apparatus 100.

The broadcasting receiving apparatus 100 transmits the text information received from the first server 200 to the second server 300. When the text information is received from the broadcasting receiving apparatus 100, the second server 300 generates response information corresponding to the received text information, and transmits the generated response information to the broadcasting receiving apparatus 100. At this time, the response information may include at least one selected from the group consisting of a response message, a control signal, and a content searching result, which corresponds to the user voice. The response message is text information in response to the user voice, such as a conversation with the user. For example, when the user voice says "can you search for 000", the response message may be text information corresponding to the user voice, such as "I'll search it". The control signal is a signal for controlling the broadcasting receiving apparatus 100, corresponding to the user voice. For example, when the user voice says "change a channel to 000" (a channel name), the control signal is a signal for controlling a tuner of the broadcasting receiving apparatus 100 to select a channel corresponding to the user voice. The content searching result is information to response to the user content search request. For example, when the user voice says "who is the main character of 000?" (a movie title), the content searching result is information for the main character of the movie corresponding to the user voice.

In particular, the second server 300 may store information in which broadcasting channel information and user uttered channel names are mapped. The user uttered channel name means a channel name that may be uttered, and called by the user with respect to a specific channel. When the channel name is included in the text information, the second server 300 may search a user uttered channel name corresponding to text information, generate a control signal for channel switching to a channel corresponding to broadcasting channel information mapped with the user uttered channel name, and transmit the generated control signal to the broadcasting receiving apparatus 100.

In some cases, the information, in which the broadcasting receiving information and the user uttered channel name are mapped, may be stored in the broadcasting receiving apparatus 200. In this case, the broadcasting receiving apparatus 100 may search the user utter channel names corresponding to the text information received from the first server 200, and perform channel switching to a channel corresponding to broadcasting channel information mapped to the searched user uttered channel name.

As one example, first information, in which some of total broadcasting channel information to be provided and the user uttered channel names are mapped, may be stored in the broadcasting receiving apparatus 100 and second information, in which the other broadcasting channel information and the user uttered channel names are mapped, may be stored in the second server 300. Therefore, the broadcasting receiving apparatus 100 may search the user uttered channel name corresponding to corresponding text information and transmit the corresponding text information to the second server 300 when the user uttered channel name is not be searched, i.e., when the user uttered channel name corresponding to the text information is not stored in the broadcasting receiving apparatus 100. In some cases, the first information in which some of total broadcasting channel information to be provided and the user uttered channel names are mapped, may be stored in the broadcasting receiving apparatus 100, and third information, in which the total broadcasting channel information and the user uttered channel names are mapped, may be stored in the second server 300. Although not shown in FIG. 1, in some cases, the interactive system may further include a content providing server (not shown). The content providing server may be implemented to include a database (DB) configured to store various contents and content information.

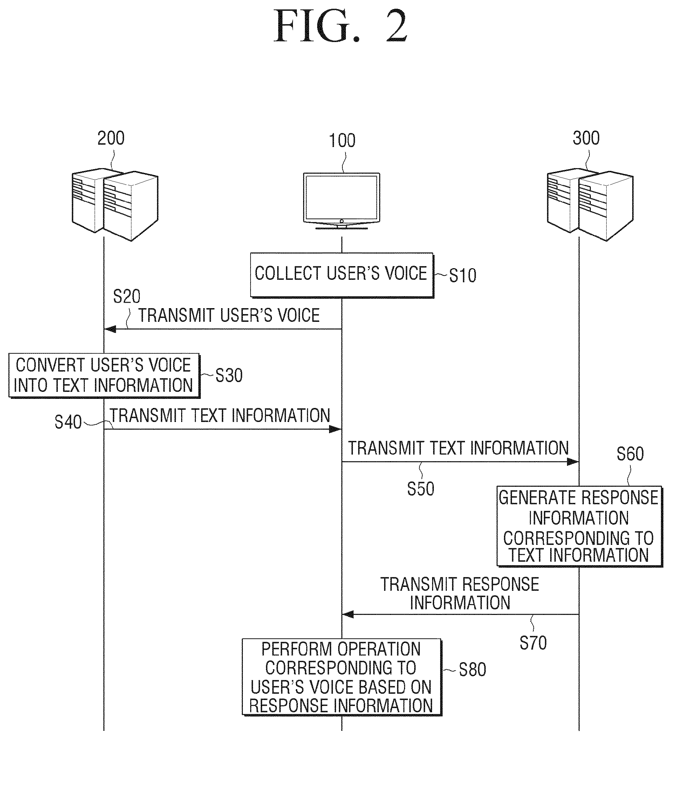

FIG. 2 is a sequence diagram explaining a general operation of the interactive system illustrated in FIG. 1.

Referring to FIG. 2, the broadcasting receiving apparatus 100 collects a user voice (S10), and transmits the collected user voice to the first server 200 (S20). Specifically, when a mode for collecting the user voice starts, the broadcasting receiving apparatus 100 may collect the user uttered voice within a preset distance, and transmit the collected user uttered voice to the first server 200.

The broadcasting receiving apparatus may include a microphone configured to receive the user uttered voice. In this case, the microphone may be integrally built in the broadcasting receiving apparatus 100, or separated from the broadcasting receiving apparatus 100. When the microphone is separated from the broadcasting receiving apparatus 100, the microphone may be implemented in a hand grip type or a laid type, on a dining table or a table. The microphone may be connected to the broadcasting receiving apparatus 100 in a wireless or wired network.

The first server 200 converts the user voice received from the broadcasting receiving apparatus 100 into text information (S30). Specifically, the server 200 may be implemented with an automatic speech recognition (ASR) server, and may convert the voice signal received from the broadcasting receiving apparatus 100 into the text information using an algorithm for speech to text (STT). The first server 200 transmits the text information to the broadcasting receiving apparatus 100 (S40).

The broadcasting receiving apparatus 100 transmits the text information received from the first server 200 to the second server 300 (S50).

The second server 300 generates response information corresponding to the text information when the text information is received from the broadcasting receiving apparatus 100 (S60). Specifically, when a channel name is included in the text information, the second server 300 may search broadcasting channel information corresponding to the text information, and generate a control signal for channel switching to a channel corresponding to the searched broadcasting channel information. Therefore, the second server 300 may pre-store information in which the broadcasting channel information and the user uttered channel names are mapped, search the broadcasting channel information corresponding to the text information based on the pre-stored information, and generate the control signal for the channel switching to the channel corresponding to the searched broadcasting channel information. The second server 300 transmits response information corresponding to the text information to the broadcasting receiving apparatus 100 (S70). When the response information is received from the second server 300, the broadcasting receiving apparatus 100 perform an operation corresponding to the user uttered voice based on the response information (S80).

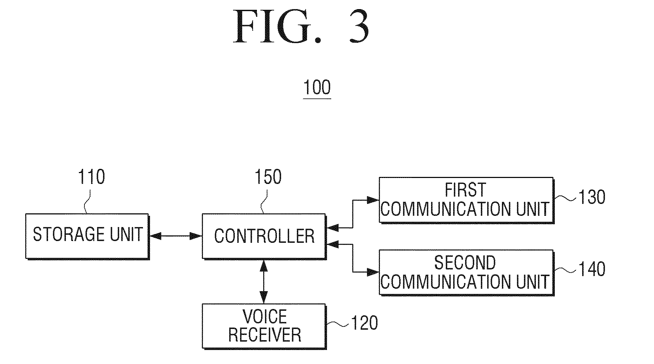

FIG. 3 is a block diagram illustrating a configuration of the broadcasting receiving apparatus illustrated in FIG. 1. Referring to FIG. 3, the broadcasting receiving apparatus 100 includes a storage unit 110, a voice receiver 120, a first communication unit 130, a second communication 140, and a controller 150.

The storage unit 110 stores the information in which the broadcasting channel information and the user uttered channel names are mapped. In other words, the storage unit 110 may store a table in which at least one of a broadcasting channel name and a broadcasting channel number is mapped with the user uttered channel name that the user calls the broadcasting channel name and the broadcasting channel number. For example, the table in which the broadcasting channel information of "HD SBS" and the user uttered channel name of "SBS" and "Seoul Broadcasting" are mapped, the broadcasting channel information of "HD UBC Ulsan broadcasting" and the user uttered channel name of "UBC", "SBS" and "Ulsan Broadcasting" are mapped, and the broadcasting channel information of "HD G1 Gangwon private broadcasting" and the user uttered channel name of "SBS", "G1" and "Gangwon private Broadcasting" are mapped. The mapping information may be downloaded from an external server (not shown) and stored. The external server (not shown) may include a second server 300 illustrated in FIG. 1, a service server (for example, an integrated server operated by a device manufacturer) configured to provide broadcasting channel information, a broadcaster-related server, etc.

According to other exemplary embodiments, the information in which the broadcasting channel information and the user uttered channel names are mapped may be updated or generated through a separate operation in the broadcasting receiving apparatus 100. For example, the mapping information may be restricted by updating the user uttered channel names included in the downloaded mapping information with uttered channel names directly input by the user through voice recognition. Alternatively, corresponding mapping information may be generated by mapping the uttered channel names directly input by the user of the broadcasting receiving apparatus 100 through the voice recognition with pre-downloaded broadcasting channel information, and storing a mapping result.

The voice receiver 120 receives a user voice. For example, the voice receiver 120 may be implemented with a microphone configured to receive the user voice such that the microphone is integrally built in the broadcasting receiving apparatus 100, or separated from the broadcasting receiving apparatus 100. When the microphone is separate from the broadcasting receiving apparatus 100, the microphone may be implemented in a hand grip type or in a laid type, on a dining table or table. The voice receiver 120 may be connected to the broadcasting receiving apparatus 100 through a wired or wireless network, and transmits the collected user voice to the broadcasting receiving apparatus 100.

On the other hand, the voice receiver 120 may process the received user voice, and generate a voice signal. In other words, the voice receiver 120 may removes noise (that is, sound of an air conditioner, sound of vacuum cleaner, music sound, and the like) from the collected user voice to generate the voice signal.

Specifically, when the analog user voice is input, the voice receiver 120 samples the user voice and converts user voice into a digital signal. The voice receiver 120 calculates energy of the converted digital signal, and determines whether or not the energy of the digital signal is equal to or larger than a preset value.

When the energy of the digital signal is equal to or larger than the preset value, the voice receiver 120 removes a noise component from the digital signal, and transmits the noise-free digital signal to the first communication unit 130. The noise component may be sudden noise which can occur in home environments and may include a sound of an air conditioner, a sound of a vacuum cleaner, music, etc.. While the energy of the digital signal is less than the preset value, the voice receiver 120 performs no processing on the digital signal, and waits for another input. Therefore, the audio processing process is not activated by sound other than the user uttered voice. Thus, unnecessary power consumption can be prevented.

The first communication unit 130 performs communication with the first server (see 200 of FIG. 1). Specifically, the first communication unit 130 may transmit the user voice to the first server 200, and receive text information corresponding to the user voice from the first server 200.

The second communication unit 140 performs communication with the second server (see 300 of FIG. 1). Specifically, the second communication unit 140 may transmit the received text information to the second server 300, and receive response information corresponding to the text information from the second server 300.

The first communication unit 130 and the second communication unit 140 may include various modules, such as a near field communication (NFC) module (not shown) and a wireless communication module (not shown). The NFC module is a module configured to perform communication with external apparatus located at a local area according to an NFC manner, such as Bluetooth or Zigbee. Further, the wireless communication module is a module configured to be connected to an external network and to perform communication according to a wireless communication protocol, such as wireless fidelity (Wi-Fi) or institute of electrical and electronic engineers (IEEE) standard. Further, the wireless communication module may further include a mobile communication module configured to access a mobile communication network and perform communication according to various mobile communication standards, such as 3rd generation (3G), 3rd generation partnership project (3GPP), or a long term evolution (LTE).

The above-described exemplary embodiment has described that the broadcasting receiving apparatus 100 includes the separate communication units 130 and 140 to perform communication with the first server 200 and the second server 300, but the above-described exemplary embodiment is not limited. In other words, the broadcasting receiving apparatus 100 can also perform communication with the first server 200 and the second server 300 through one communication module.

The controller 150 controls an overall operation of the broadcasting receiving apparatus 100.

In particular, when the text information corresponding to the user uttered voice is received from the first server 200, the controller 150 may perform object analysis and sentence pattern analysis for the received text information. The object analysis is used to determine the user uttered channel name included in the received text information, and the sentence pattern analysis is used to determine the user utterance intention for the received text information, e.g., channel switching intention.

Specifically, when the text information corresponding to the user uttered voice is received from the first server 200, the controller 150 may search the user uttered channel name corresponding to the received text information based on the information, in which the broadcasting channel information and the user uttered channel names are mapped, stored in the storage unit 110, and control channel switching to a channel corresponding to the broadcasting channel information mapped with the searched user channel name. In some cases, the controller 150 may display a user interface (UI) including the text information received from the first server 200, so that the user may confirm whether or not the voice recognition is normally performed.

When the information (i.e., the user uttered channel name) corresponding to the text information is not searched based on the information stored in the storage unit 110, the controller 150 may transmit the text information to the second server 300 through the second communication unit 140, and receive a control signal for the channel switching to the channel corresponding to the text information from the second server 300. In this case, the second server 300 may determine the user uttered channel name corresponding to the received text information based on the information in which the broadcasting channel information and the user utter channel names are mapped, generate the control signal for the channel switching to the channel corresponding to the broadcasting channel information mapped with the determined user uttered channel name, and transmit the control signal to the broadcasting receiving apparatus 100. Therefore, the controller 150 may perform the channel switching according to the control signal received from the second server 300.

The controller 150 may determine the user utterance intention through the sentence pattern analysis for the text information received from the first server 200, and perform channel switching to the channel corresponding to the broadcasting channel information mapped with the user uttered channel name searched based on the information stored in the storage unit 110 when it is determined that the user utterance intention is the channel switching.

The storage unit 110 may have stored information for determining the user utterance intention through the sentence pattern analysis for the text information received from the first server 200. Specifically, the storage unit 110 may have stored at least one of a dialog act and a main act predefined for every specific service domain. For example, in the broadcasting domain, the dialog act may include Statement, Request, Why request, Yes-No question, etc., and the main act may include TV on/off, channel switching, program searching, program schedule searching, program scheduling, etc. Further, the storage unit 110 may have stored control signals mapped with the user utterance intentions. In other words, when the user utterance intention is channel switching, the storage unit 110 may match the control signal mapped with channel switching, and store the matching result. However, this is merely illustrative, and the predefined dialog act and main act may be stored without division according to the service domain.

When it is determined that the user utterance intention is the channel switching based on the above-described information in the storage unit 110, the controller 150 may control channel switching to the corresponding channel. For example, the controller 150 may determine the user utterance intention for "000" (the user uttered channel name), "turn 000", and "allow me to watch 000" as channel switching, and perform the channel switching to "000".

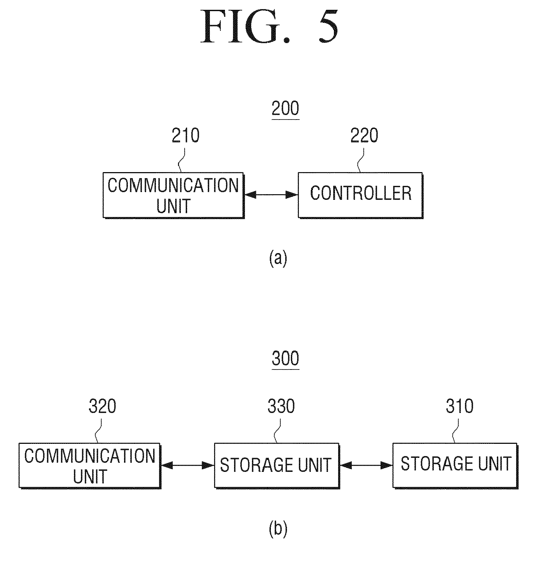

When the user utterance intention through the sentence pattern analysis for the text information received from the first server 200 is not determined, the controller 150 may transmit the text information to the second server 300. When the user utterance intention is determined as the channel switching in the second server 300, the controller 150 may receive the control signal for the channel switching to the channel corresponding to the text information from the second server 300. An operation of the second server 300 will be described later with reference to FIG. 5(b).

The controller 150 determines that the broadcasting channel information is changed based on broadcasting channel information received from the outside, and the controller 150 may update the broadcasting channel information stored in the storage unit 110 with the received broadcasting channel information, and store the updated broadcasting channel information. In this case, the broadcasting channel information may be received from an external broadcasting station server or a broadcasting information providing server, periodically or by a user command. For example, when the broadcasting channel information is changed by a central broadcasting station, a local broadcasting station, etc., the changed contents may be reflected on the pre-stored mapping table.

The controller 150 may transmit the text information to the second server 300 according to various exemplary embodiments.

In one exemplary embodiment, when the user uttered channel name corresponding to the text information is not searched based on the information stored in the storage unit 110, the controller 150 may not perform the sentence pattern analysis for the text information, and may transmit the text information to the second server 300. In this case, the second server 300 may determine the user uttered channel name corresponding to the received text information as well as analyze the user utterance intention for the text information, and transmit a control signal corresponding to an analysis result to the broadcasting receiving apparatus 100.

Even when the user uttered channel name corresponding to the text information is not searched based on the information stored in the storage unit 110, the controller 150 may perform the sentence pattern analysis for the text information, and transmit a portion (e.g., a portion corresponding to the user uttered channel name) of the text information to the second server 300 when it is determined that the user utterance intention is channel switching. In this case, the second server 300 may search broadcasting channel information mapped with the received portion of the text information, and transmit a searched result to the broadcasting receiving apparatus 100. The controller 150 may perform the channel switching operation based on the determined user utterance intention and the broadcasting channel information received from the server 300.

In another exemplary embodiment, although the controller 150 determines the user uttered channel name corresponding to the text information and the broadcasting channel information mapped with the user uttered channel name based on the information stored in the storage unit 110, when the user utterance intention is not determined, the controller 150 may transmit the whole text information or a portion of the text information (e.g., text information of the whole text information other than the user uttered channel name) to the second server 300. In this case, when the whole text information is received, the second server 300 may analyze the user uttered channel name corresponding to the received text information and the user utterance intention (e.g., channel switching intention), and transmit a control signal for channel switching corresponding thereto to the broadcasting receiving apparatus 100. Alternatively, when the portion of the whole text information is received, the second server 300 may determine the user utterance intention, and transmit a determination result to the broadcasting receiving apparatus 100. In this case, the broadcasting receiving apparatus 100 may perform the channel switching operation based on the broadcasting channel information searched based on the user uttered channel name, and the user utterance intention information received from the second server 300.

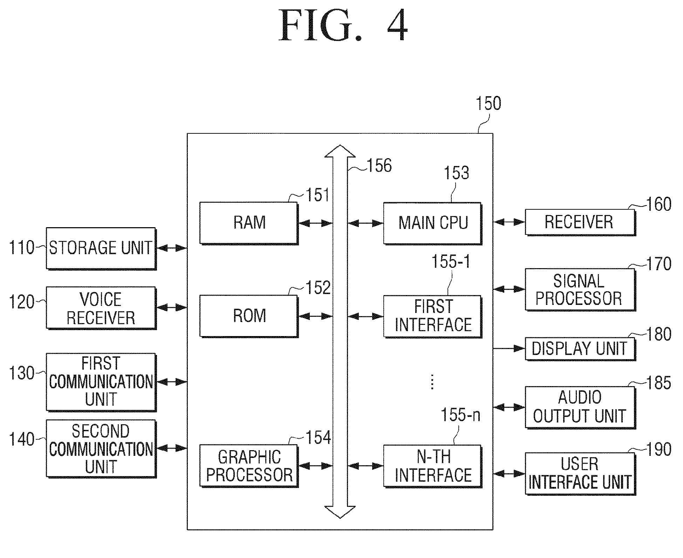

FIG. 4 is a block diagram illustrating a detailed configuration of a broadcasting receiving apparatus according to an exemplary embodiment.

Referring to FIG., 4, a broadcasting receiving apparatus 100 includes a storage unit 110, a voice receiver 120, a first communication unit 130, a second communication unit 140, a controller 150, a receiver 160, a signal processor 170, a display unit 180, an audio output unit 185, and a user interface unit 190. Detailed description of components of the broadcasting receiving apparatus illustrated in FIG. 4, which overlap the components of the broadcasting receiving apparatus of FIG. 3, will be omitted.

The receiver 160 receives various contents. Specifically, the receiver 160 receives the contents from a broadcasting station which transmits broadcasting program contents using a broadcasting network, or a web server which transmits content files using the Internet. Alternatively, the receiver 160 may receive contents from various recording medium reproducing apparatuses, which are provided in the broadcasting receiving apparatus 100 or connected to the broadcasting receiving apparatus 100. The recording medium reproducing apparatus may be an apparatus configured to reproduce contents stored in various kinds of recording media, such as a compact disc (CD), a digital versatile disc (DVD), a hard disc (HD), a blu-ray disc, a memory card, or a USB memory.

In an exemplary embodiment, which receives the contents from the broadcasting station, the receiver 160 may be implemented to include a configuration such as a tuner (not shown), a demodulator (not shown), and an equalizer (not shown). On the other hand, in an exemplary embodiment, which receives contents from a source such as a web server, the receiver 160 may be implemented with a network interface card (not shown). Alternatively, in an exemplary embodiment which receives the contents from the above-described various recording medium reproducing apparatuses, the receiver 160 may be implemented with an interface unit (not shown) connected to the recording medium reproducing apparatus. As described above, the receiver 160 may be implemented in various types according to exemplary embodiments.

The signal processor 170 performs signal processing on contents so that the contents received through the receiver 160 are to be output through an output unit.

Specifically, the signal processor 170 may perform various image processing, such as decoding, scaling, noise filtering, frame rate conversion, and resolution conversion on a video signal included in the contents, and convert the video signal to be output in the display unit 180. Further, the signal processor 170 may perform various signal processing, such as decoding, amplification, or noise filtering on an audio signal included in the contents, and convert the audio signal to be output in the audio output unit 185.

The display unit 180 is configured to output the various kinds of video signals processed in the signal processor 170. The display unit 180 may be implemented with a liquid crystal display (LCD), an organic light emitting display (OLED), a plasma display panel (PDP), etc., and provide various display screens through the broadcasting receiving apparatus 100.

The audio output unit 185 may be configured to output various audio signals processed in the signal processor 170, as well as various alarm sound or voice messages.

The user interface unit 190 receives various user operations, and transmits the received user operations to the controller 150.

The user interface unit 190 may be implemented with an infrared (IR) receiver (not shown) configured to receive a remote control signal, transmitted from a remote controller configured to control the broadcasting receiving apparatus 100. In some cases, the user interface unit 190 may be implemented with an input panel provided in the broadcasting receiving apparatus 100. The input panel may be configured in a touch pad, a key pad including various kinds of functional keys, number keys, special keys, character keys, etc., or a touch screen manner.

The user interface unit 190 may receive various user operations for controlling functions of the broadcasting receiving apparatus 100. For example, when the broadcasting receiving apparatus 100 is implemented with a smart TV, the user interface unit 190 may receive the user operations for controlling functions of the smart TV, such as power on/off, channel switching, or volume adjustment. In this case, the controller 150 may control other components to execute various functions corresponding to the user operations input through the user interface unit 190.

In particular, the user interface unit 190 receives the user operations for initiating a voice recognition mode for user voice collection. For example, the user interface unit 190 may be implemented in a touch screen type together with the display unit 180, and display an object (for example, an icon) for receiving the voice recognition mode. On the other hand, the use interface unit 190 may include a separate button configured to receive the voice recognition mode. When the user operation for initiating the voice recognition mode is received through the user interface unit 190, the controller 150 may activate the voice receiver 120 and receive the user voice for channel switching uttered within a preset distance. The controller 150 may receive the control signal for channel switching corresponding to the user voice received through communication with the first server 200 and the second server 300, and control the channel switching function to be performed.

The controller 150 controls an overall operation of the broadcasting receiving apparatus 100, using various kinds of programs stored in the storage unit 110.

Specifically, the control unit 150 includes a random access memory (RAM) 151, a read only memory (ROM) 152, a main central processing unit (CPU) 153, a graphic processor 154, a first interface 155-1 to a n-th interface 155-n, and a bus 156.

The RAM 151, the ROM 152, the main CPU 153, the graphic processor 154, the first to n-th interfaces 155-1 to 155-n, etc., may be connected to each other through the bus 156.

The first to n-th interfaces 155-1 to 155-n are connected to the above-described various components. One of the interfaces 155-1 to 155-n may be a network interface connected to an external apparatus through a network.

The main CPU 153 accesses the storage unit 110, and performs booting using operating system (O/S) stored in the storage unit 110. The main CPU performs various operations using programs, contents, data, etc., stored in the storage unit 110.

The ROM 152 stores a command set for system booting. When a turn-on command is received and power is supplied, the main CPU 153 copies the O/S stored in the storage unit 110 to the RAM 151 according to a command stored in the ROM 152, execute the O/S, and boots the system. When the booting is completed, the main CPU 153 copies the various kinds of application programs stored in the storage unit 110 to the RAM 151, execute the application programs copied in the RAM 151, and perform various kinds of operations.

The graphic processor 154 generates a screen including various objects such as icons, images, and texts using an operating unit (not shown) and a rendering unit (not shown). The operating unit calculates an attribution value such as a coordinate value in which each object is indicated according to a layout of the screen, a shape, a size, and a color using a control command received from the graphic processor 154. The rendering unit generates screens having various layouts including the objects based on the attribution value calculated in the operating unit. The screens generated in the rendering unit are displayed in a display area of the display unit 180.

FIG. 4 illustrates an example of the detailed configuration included in the broadcasting receiving apparatus 100. According to embodiments, a portion of the components illustrated in FIG. 4 may be omitted or modified, or other components may be further included therein. For example, when the broadcasting receiving apparatus 100 is implemented with a user terminal apparatus, such as a smart phone, a global positioning system (GPS) receiver (not shown) configured to calculate a current position of the broadcasting receiving apparatus 100 may be further included.

FIG. 5 is a block diagram illustrating configurations of the first server 200 and the second server 300 illustrated in FIG. 1.

As illustrated in FIG. 5(a), the first server 200 includes a communication unit 210 and a controller 220.

The communication unit 210 performs communication with the broadcasting receiving apparatus 100, receives a user voice, and transmits text information corresponding to the user voice to the broadcasting receiving apparatus 100.

The controller 220 may convert the user voice into text information using an STT engine. The STT engine is a module configured to convert a voice signal into text, and may convert the voice signal into the text using existing STT algorithms.

For example, the controller 220 detects a start and an end of the user uttered voice in the received voice signal, and determines a voice section. Specifically, the controller 220 may calculate energy of the received voice signal, classify an energy level of the voice signal according to the calculated energy, and detect the voice section through dynamic programming. Further, the control unit 220 may detect a phoneme, which is the smallest unit of the voice based on an acoustic model in the detected voice section, to generate phoneme data and generate the text information by applying a hidden Markov model (HMM) probabilistic model to the generated phoneme data.

As illustrated in FIG. 5(b), the second server 300 includes a storage unit 310, a communication unit 320, and a controller 330.

The storage unit 310 stores information in which broadcasting channel information and user uttered channel names are mapped. The mapping information may be stored, for example, in a metadata DB.

The storage unit 310 stores various pieces of information for generating response information corresponding to the text information received from the broadcasting receiving apparatus 100.

Specifically, the storage unit 310 may store a dialog act, a main act, and a core element predefined every a specific service domain. For example, in the case of the broadcasting domain, the dialog act may include a Statement, Request, Why request, Yes-No question, etc., and the main act may include TV on/off, channel switching, program searching, program schedule searching, program scheduling, etc. The core element may include a genre, a program title, a starting time, a channel name, an actor name, etc. However, exemplary embodiments are not limited. In another exemplary embodiment, the core element may be stored according service domains, but the predefined dialog act and main act may be stored without classification of the service domain.

The storage unit 310 may include a corpus DB configured to store responses corresponding to the user utterance intentions according to the domains. For example, the storage unit 310 may store "... the genre of the program is ..." as the response, corresponding to the user utterance intention inquiring a genre of a specific program in the broadcasting service domain. The storage unit 310 may store "... the starting time of the program is ..." as the response, corresponding to the user utterance intention inquiring a starting time of a program in the broadcasting service domain

Further, the storage unit 310 may store control commands matched with the user utterance intentions. For example, when the user utterance intention is channel switching, the storage unit 310 may match a control signal for changing the channel of the broadcasting receiving apparatus 100, and store a matching result. When the user utterance intention is scheduled recording, the storage unit 310 may match a control signal for executing a scheduled recording function for a specific program in the broadcasting receiving apparatus 100, and store a matching result.

The communication unit 320 performs communication with the broadcasting receiving apparatus 100, receives text information into which the user voice is converted through the first server 200, and transmits response information corresponding to the text information to the broadcasting receiving apparatus 100. Therefore, the communication unit 320 may include various communication modules, such as an NFC module (not shown) or a wireless communication module (not shown).

The controller 330 controls an overall operation of the second server 300.

In particular, when text information corresponding to the user voice is received from the broadcasting receiving apparatus 100, the controller 330 may perform object analysis and sentence pattern analysis for the received text information. The object analysis is used to determine the user uttered channel name included in the received text information, and the sentence pattern analysis is used to determine the user utterance intention for the received text information, e.g., channel switching intention.

When the text information corresponding to the user voice including the channel name is from the broadcasting receiving apparatus 100, the controller 330 searches the user uttered channel name corresponding to the text information from the storage unit 310.

Subsequently, the controller 330 may generate a control signal for channel switching to a channel corresponding to broadcasting channel information which corresponds to the searched user uttered channel name, and control the control signal to be transmitted to the broadcasting receiving apparatus 100.

The controller 330 may analyze a sentence pattern for the text information received from the broadcasting receiving apparatus 100 using the predefined dialog act, main act, and core element stored in the storage unit 310, recognize the user utterance intention corresponding to the text information, and generate a control signal and/or response corresponding to the user utterance intention as response information.

For example, assume that the text "turn 000" (broadcasting channel name) is received from the broadcasting receiving apparatus 100. The controller 330 determines that the text received is a sentence pattern related to "request" through the dialog act and determines "channel switching" to "000" through the main act and the core element. As a result, the controller 330 may determine that the user utterance intention corresponding to the received text information is to "request" "the channel switching" to "000".

The controller 330 may generate the control signal for performing the channel switching to "000" in the broadcasting receiving apparatus 100 with respect to the user utterance intention "requesting" "the channel switching" to "000".

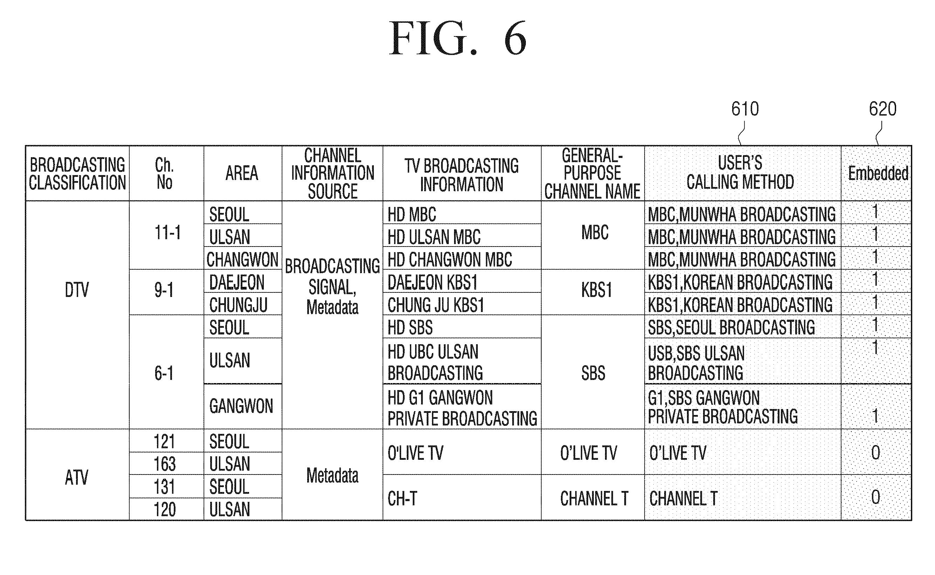

In this case, the broadcasting channel information corresponding to "000" may be determined based on the information pre-stored in the storage unit 310, e.g., the information in which the broadcasting channel information and the user uttered channel names are mapped. For example, referring to FIG. 6, since the broadcasting channel information corresponding to the user uttered channel name called "SBS" is "6-1" in an Ulsan area, the controller 330 may generate a control signal for performing channel switching to "6-1".

Further, when the user utterance intention is determined as a request for channel switching, the controller 330 may perform the channel switching based on a searching result identical with "000". For example, when "000" is "SBS" and content information including "SBS" such as SBS, SBS morning wide, and SBS news has been stored in the storage unit 310, since the controller 330 processes not all values including "SBS" but only the value which accurately corresponds to "SBS" as a searching result, the controller 330 may exclude the information such as "SBS morning wide" and "SBS news" from the searching result for the channel switching. Therefore, the accurate channel switching in accordance with the user intention can be rapidly performed. When "000" is determined as "SBS", e.g., the user uttered channel name which is called by the user as the broadcasting channel, the controller 330 may allow the channel switching to be performed based on the table, in which the broadcasting channel information and the user uttered channel name are mapped, stored in the storage unit 310.

FIG. 6 is a view illustrating a channel mapping table according to an exemplary embodiment.

As illustrated in FIG. 6, the channel mapping table has information for all channels broadcast in respective areas of each country. A filed 610 for "user calling method" indicates a unique broadcasting identifier for each channel name and a plurality of candidate lists for the user uttered channel name, which can be generally uttered by the user.

Other than a method for processing all values including the uttered channel name in a channel DB constructed based on broadcasting information in the related art, the exemplary embodiment only searches the field for "user calling method" using a search target DB for the uttered channel name. Thus, the exemplary embodiment can accurately extract the value identical with the user uttered channel name.

On the other hand, a filed 620 for "embedded" may indicate whether the channel mapping is supported in an embedded configuration or in an interactive server.

For example, a channel in which a value of "embedded" is "1" indicates main channels supported in the embedded configuration of the broadcasting receiving apparatus 100, and a channel in which a value of "embedded" is "0" indicates channels supported in the interactive server, other than the embedded configuration.

However, embodiments are not limited, and an implementation example of setting the "embedded" value, a setting value, etc., may be variously modified. For example, the uttered channel name called "Olive" may be additionally included in the field of "user calling method", corresponding to the broadcasting information of "O'live TV".

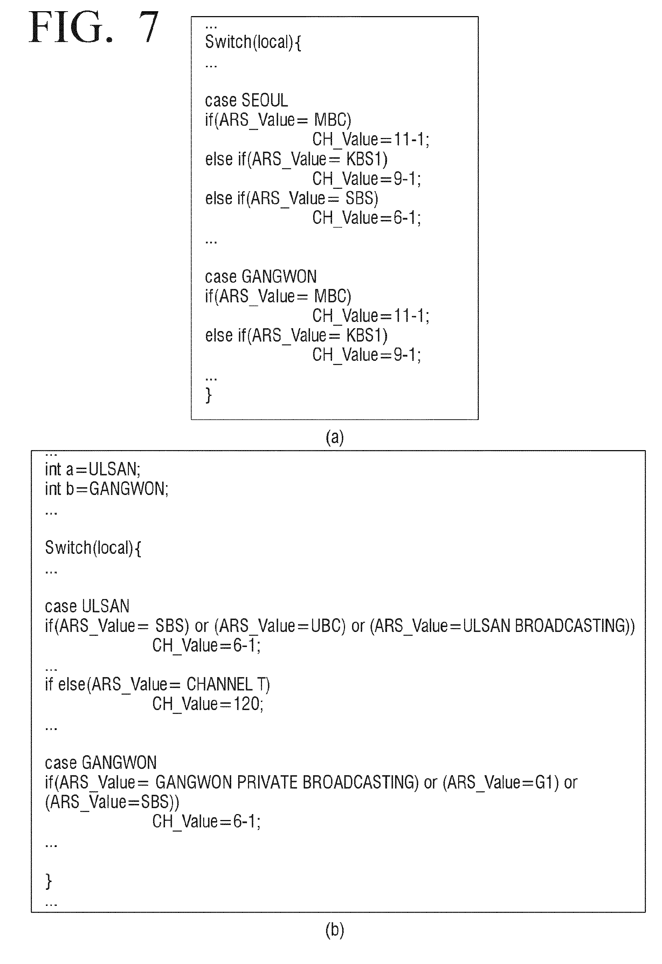

FIG. 7 is a view illustrating an algorithm type for channel switching according to voice recognition according to an exemplary embodiment.

FIG. 7(a) illustrates an algorithm in the related art. In FIG. 7(a), it is difficult to provide a voice recognition function for SBS, since a channel name for SBS in the broadcasting information is changed in areas other than Seoul. In other words, when a central broadcasting is resent by a local broadcasting station, if the channel name in the broadcasting information is changed, the channel switching the function through voice recognition function is not normally performed. When the unique channel number is changed in the resending process, channel switching to other channels may be performed.

FIG. 7(b) illustrated an algorithm according to an exemplary embodiment. FIG. 7(b) shows an algorithm for a mapping method when user calling for the SBS broadcasting in a Gangwon area is input, and further shows an algorithm for a mapping method when user calling for an analog channel "CH-T" in the Ulsan area is input.

In other words, the abnormal channel switching due to a change in the channel name in the broadcasting information when the central broadcasting is resent by the local broadcasting station in the related art can be solved by the field of "user calling method" in the channel mapping table illustrated in FIG. 6, according to an exemplary embodiment.

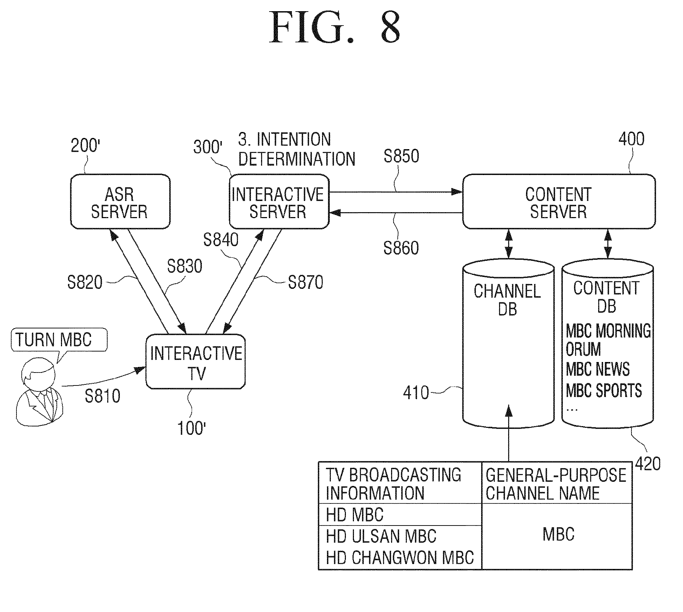

FIG. 8 is a view illustrating an operation of an interactive system according to an exemplary embodiment.

In the exemplary embodiment illustrated in FIG. 8, a case, in which the broadcasting receiving apparatus 100 is implemented with an interactive TV 100', the first server 200 is implemented with an ASR server 200', the second server 300 is implemented with an interactive server 300', and a content server 400 are separately implemented, will be described.

First, when a user voice is received (S810), the interactive TV 100' transmits the received user voice to the ASR server 200' (S820). The user voice may be voice including a broadcasting channel name.

When text information corresponding to the user voice is received from the ASR server 200' (S830), the interactive TV 100' transmits the received text information to the interactive server 300' (S840).

In this case, the interactive server 300' may determine a user intention included in the received text information, and search the content server 400 based on the determined intention (S850). The content server 400 is a data server configured to retain contents, and may include a channel DB 410 configured to store channel information and a content DB configured to store content information, e.g., program information. The content server 400 accurately extracts only a result identical with "MBC" through the channel DB 410 and the content DB 420. In other words, the content server 400 accurately extracts only the result identical with "MBC" through the channel mapping table illustrated in FIG. 6, which is stored in the channel DB 410. Therefore, since the contents including character string "MBC", such as "MBC Morning Forum", "MBC News", or "MBC Sports" included in the content DB 420 is not searched as the result, an accurate channel searching result can be obtained.

Further, the content server 400 may be implemented with a web server type, which stores various pieces of information. For example, the content server 400 may perform web searching based on the received text information, and transmit a searching result to the interactive server 300'.

The detailed method of determining the user intention based on the received text information in the active server 300' has been described in FIG. 3. Thus, detailed description thereof will be omitted.

Subsequently, when contents corresponding to the text information are searched through the content server 400 (S860), the interactive server 300' transmits a control signal based on a searching result to the interactive TV 100' (S870).

The above-described exemplary embodiments have been described, assuming that the content server 400, configured to manage and store contents, is separately implemented. However, the exemplary embodiments may be implemented such that the interactive server 300' manages and stores the contents, without the above-described content server 400.

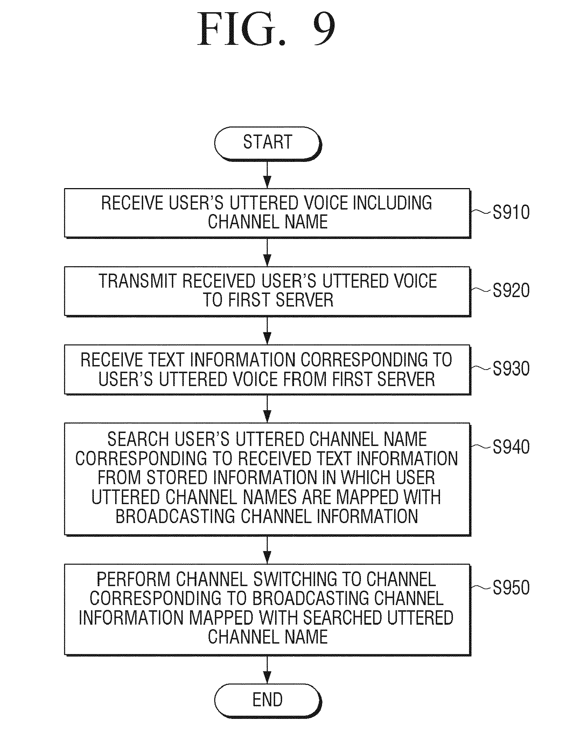

FIG. 9 is a flowchart illustrating a control method of a broadcasting receiving apparatus according to an exemplary embodiment.

In the control method of a broadcasting receiving apparatus illustrated in FIG. 9, when a user uttered voice including a channel name is received (S910), the broadcasting receiving apparatus transmits the received user uttered voice to the first server (S920).

When text information corresponding to the user uttered voice is received from the first server (S930), the broadcasting receiving apparatus determines the user uttered channel name corresponding to the text information based on information stored therein, in which broadcasting channel information and user uttered channel names are mapped (S940).

Subsequently, the broadcasting receiving apparatus performs channel switching to the channel corresponding to the broadcasting channel information mapped with the searched user uttered channel name (S950).

When the information corresponding to the text information is not determined in step S940, the broadcasting receiving apparatus transmits the text information to the second server, and receives a control signal for channel switching to the channel corresponding to the text information from the second server. The second server may include a DB configured to store the information the broadcasting channel information and the user channel names are mapped, and search the user uttered channel name corresponding to the received text information in the DB.

The control method may further include determining the user utterance intention through sentence pattern analysis for the text information. When it is determined that the user utterance intention is channel switching in step S950, the broadcasting receiving apparatus performs the channel switching to the channel corresponding to the broadcasting channel information mapped with the determined channel name.

When it is determined that the user utterance intention is not determined through the sentence pattern analysis for the text information, the broadcasting receiving apparatus may transmit the text information to the second server. When it is determined in the second server that the user utterance intention is channel switching, the broadcasting receiving apparatus may receive a control signal for the channel switching to the channel corresponding to the text information from the second server.

Further, when the broadcasting channel information is changed based on broadcasting channel information received from the outside according to a preset event, the broadcasting receiving apparatus may update the stored broadcasting channel information with the changed broadcasting channel information.

The user uttered channel name may include a candidate channel name which is generally uttered by the user as a channel name corresponding to corresponding broadcasting channel information. The broadcasting channel information may include at least one of a broadcasting channel name and a broadcasting channel number.

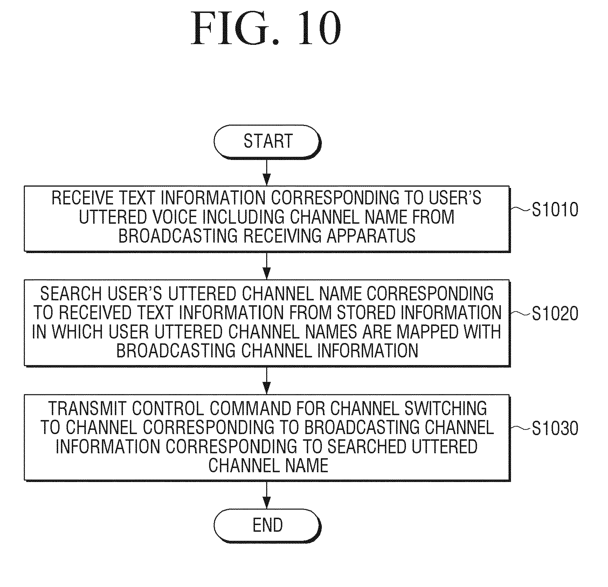

FIG. 10 is a flowchart illustrating a control method of a server according to an exemplary embodiment.

According to the control method of a server illustrated in FIG. 10, when text information corresponding to a user uttered voice including a channel name is received from the broadcasting receiving apparatus (S1010), the server determines a user uttered channel name corresponding to the text information based on information stored therein, in which broadcasting channel information and user uttered channel names are mapped (S1020).

Subsequently, the server transmits a control signal for channel switching to a channel corresponding to the broadcasting channel information mapped with the determined user uttered channel name to the broadcasting receiving apparatus (S1030).

Further, the control method may further include determining the user utterance intention through sentence pattern analysis for the text information. When it is determined in step S1030 that the user utterance intention is channel switching, the server may transmit the control signal for the channel switching to the channel corresponding to the broadcasting channel information mapped with the determined user uttered channel name.

When the broadcasting channel information is changed based on broadcasting channel information received from the outside according to a preset event, the server may update the stored information with the changed broadcasting channel information.

In this case, the text information may be information in which the user uttered voice is converted into text through an ASR server.

Further, the user uttered channel name includes a candidate channel name, which is generally uttered by the user as a channel name corresponding to corresponding broadcasting channel information, and the broadcasting channel information may include at least one of a broadcasting channel name and a broadcasting channel number.

Therefore, accurate channel switching can be rapidly performed.

Exemplary embodiments of the first communication unit 130, the second communication unit 140, the communication unit 210, and the communication unit 320 are not limited. For example, each of the first communication unit 130, the second communication unit 140, the communication unit 210, and the communication unit 320 may include at least one processor. In another example, each of the first communication unit 130, the second communication unit 140, the communication unit 210, and the communication unit 320 may include a circuit.

The control methods according to the above-described exemplary embodiments may be implemented with a program provided to the broadcasting receiving apparatus.

As an example, there may be provided a non-transitory computer-readable medium in which a program is stored to execute a control method including receiving user uttered voice including a channel name, transmitting the received user uttered voice to a first server, determining a user uttered channel name corresponding to text information based on pre-stored information in which broadcasting channel information and user uttered channel names are mapped when the text information corresponding to the user uttered voice is received from the first server, and performing channel switching to a channel corresponding to broadcasting channel information mapped with the determined user uttered channel name.

The non-transitory computer-recordable medium is not a medium configured to temporarily store data such as a register, a cache, or a memory, but an apparatus-readable medium configured to semi-permanently store data. Specifically, the above-described applications or programs may be stored and provided in the non-transitory computer-recordable medium, such as a compact disc (CD), a digital versatile disc (DVD), a hard disc (HD), a blu-ray disc, a USB, a memory card, or a read only memory (ROM).

The foregoing exemplary embodiments and advantages are merely exemplary and are not to be construed as limiting the exemplary embodiments. The exemplary embodiments can be readily applied to other types of devices. Also, the description of the exemplary embodiments is intended to be illustrative, and not to limit the scope of the claims, and many alternatives, modifications, and variations will be apparent to those skilled in the art.

## Claims

1. A broadcasting receiving apparatus comprising:
a storage unit which is configured to store information in which broadcasting channel information and user uttered channel names are mapped;
a voice receiver which is configured to receive a user uttered voice, including a channel name;
a first communicator which is configured to transmit the received user uttered voice to a first server; and
a controller which is configured to search a user uttered channel name corresponding to text information from the storage unit when the text information corresponding to the user uttered voice is received from the first server, and control channel switching to a channel corresponding to the broadcasting channel information mapped with the searched user uttered channel name.

2. The broadcasting receiving apparatus as claimed in claim 1, further comprising a second communicator which is configured to perform communication with a second server configured to store the information in which the broadcasting channel information and the user uttered channel names are mapped,
wherein the controller transmits the text information to the second server when the user uttered channel name corresponding to the text information is not searched from the storage unit, and receives a control signal for the channel switching to the channel corresponding to the text information from the second server.

3. The broadcasting receiving apparatus as claimed in claim 1 or 2, wherein the controller determines a user utterance intention through sentence pattern analysis for the text information, and controls the channel switching to the channel corresponding to the broadcasting channel information mapped with the searched user uttered channel name when it is determined that the user utterance intention is the channel switching.

4. The broadcasting receiving apparatus in any one of claims 1 to 3, wherein the controller transmits the text information to a second server when the user utterance intention is not determined through sentence pattern analysis for the text information, and receives a control signal for the channel switching to the channel corresponding to the text information from the second server when it is determined in the second server that the user utterance intention is the channel switching.

5. The broadcasting receiving apparatus as claimed in any one of claims 1 to 4, wherein the controller updates the stored broadcasting channel information with changed broadcasting channel information when the broadcasting channel information is changed based on broadcasting channel information received from outside according to a preset event.

6. The broadcasting receiving apparatus as claimed in any one of claims 1 to 5, wherein the user uttered channel names include candidate channel names, which are uttered by the user as a channel name corresponding to the broadcasting channel information, and the broadcasting channel information includes at least one of a broadcasting channel name and a broadcasting channel number.

7. A server which performs communication with a broadcasting receiving apparatus, the server comprising:
a communicator which is configured to perform the communication with the broadcasting receiving apparatus;
a storage unit which is configured to store information in which broadcasting channel information and user uttered channel names are mapped; and
a controller which is configured to search a user uttered channel name corresponding to text information from the storage unit when the text information corresponding to the user uttered voice including a channel name is received from the broadcasting receiving apparatus, and control transmission of a control signal for channel switching to a channel corresponding to the broadcasting channel information mapped with the searched user uttered channel name to the broadcasting receiving apparatus.

8. The server as claimed in claim 7, wherein the controller determines a user utterance intention through sentence pattern analysis for the text information, and controls the transmission of the control signal for the channel switching to the channel corresponding to the text information to the broadcasting apparatus when it is determined that the user utterance intention is the channel switching.

9. The server as claimed in claim 7 or 8, wherein the controller updates the stored information with changed broadcasting channel information when the broadcasting channel information is changed based on broadcasting channel information received from outside according to a preset event.

10. The server as claimed in any one of claims 7 to 9, wherein the user uttered channel names include candidate channel names, which are uttered by the user as a channel name corresponding to the broadcasting channel information, and the broadcasting channel information includes at least one of a broadcasting channel name and a broadcasting channel number.

11. A control method of a broadcasting receiving apparatus, the control method comprising:
receiving a user uttered voice, including a channel name;
transmitting the received user uttered voice to a first server; determining a user uttered channel name corresponding to text information based on pre-stored information in which broadcasting channel information and user uttered channel names are mapped, when the text information corresponding to the user uttered voice is received from the first server; and
performing channel switching to a channel corresponding to the broadcasting channel information mapped with the determined user uttered channel name.

12. The control method as claimed in claim 11, further comprising:
transmitting the text information to a second server which is configured to store the information in which the broadcasting channel information and the user uttered channel names are mapped, when the user uttered channel name corresponding to the text information is not determined based on the stored information; and
receiving a control signal for the channel switching to the channel corresponding to the text information from the second server.

13. The control method as claimed in claim 11 or 12, further including determining a user utterance intention through sentence pattern analysis for the text information,
wherein the performing channel switching includes performing the channel switching to the channel corresponding to the broadcasting channel information mapped with the determined user uttered channel name when it is determined that the user utterance intention is the channel switching.

14. The control method as claimed in any one of claims 11 to 13, further comprising:
transmitting the text information to a second server when the user utterance intention is not determined through sentence pattern analysis for the text information; and
receiving a control signal for the channel switching to the channel corresponding to the text information from the second server when it is determined that the user utterance intention is the channel switching.

15. A control method of a server which performs communication with a broadcasting receiving apparatus, the control method comprising:
receiving text information corresponding to a user uttered voice, including a channel name, from the broadcasting receiving apparatus;
determining a user uttered channel name corresponding to the text information based on pre-stored information in which broadcasting channel information and user uttered channel names are mapped; and
transmitting a control signal, for channel switching to a channel corresponding to the broadcasting channel information mapped with the determined user uttered channel name, to the broadcasting receiving apparatus.
